# EUROPÄISCHE PATENTSCHRIFT

(11) **EP 1 460 496 B1**
(45) Veröffentlichungstag und Bekanntmachung des Hinweises auf die Patenterteilung: **24.10.2007**
(21) Anmeldenummer: 04100875.6
(22) Anmeldetag: 04.03.2004
(51) Int. Cl.: G05B 19/042

(54) **Peripheriechipsatz**
Peripheral chip set
Jeu de puces périphérique

(30) Priorität: 19.03.2003 DE 10312107; 25.07.2003 DE 10334014
(43) Veröffentlichungstag der Anmeldung: 22.09.2004
(73) Patentinhaber: ROBERT BOSCH GMBH, 70442 Stuttgart (DE)
(72) Erfinder: Graf, Jens, 97469 Gochsheim (DE); Kirschner, Manfred, 70197 Stuttgart (DE); Partes, Hans, 70435 Stuttgart (DE)

(56) Entgegenhaltungen:
- EP-A- 0 982 193
- DE-A- 10 161 581

## Beschreibung

Die vorliegende Erfindung betrifft einen Peripheriechipsatz zur Realisierung von Hardwarefunktionen eines Steuergerätes sowie ein Motorsteuergerät mit einem erfindungsgemäßen Peripheriechipsatz.

### Stand der Technik

Moderne Steuergeräte, insbesondere zur Motorsteuerung bestehen aus einem Rechnerkern (Microcontroller) sowie einem Peripheriechipsatz zur Realisierung der benötigten Hardwarefunktionen. Dieser Peripheriechipsatz besteht typischerweise aus verschiedenen applikationsspezifischen integrierten Schaltkreisen (ASICs) und weiteren elektronischen Baugruppen. Die Aufteilung der benötigten Funktionen auf die verschiedenen ASICs und Baugruppen des Peripheriechipsatzes wird als Partitionierung bezeichnet. Beispiele für Steuergeräte sind bereits aus der EP 982 193 A2 und der DE 101 61 581 A1 bekannt.

Ein Peripheriechipsatz der Motorsteuergerätegeneration gemäß dem Stand der Technik weist typischerweise eine zwei ASICs umfassende Partitionierung auf. Hierbei ist ein erster ASIC vorgesehen, welcher folgende Komponenten aufweist: eine Spannungsversorgung mit drei verschiedenen Ausgangsspannungen; drei Geberversorgungen, welche jeweils eine Spannung von 5 Volt bereitstellen, ein Überwachungsmodul, zwei Treiber für bidirektionale serielle Schnittstellen, ein CAN-Treiber, vier Open-drain-Kleinsignalendstufen, eine Hauptrelaissteuerung, eine Hauptrelaisendstufe, eine Auswertesschaltung für Induktivgeber. Ein zweiter ASIC (ASIC 2), weist eine Achtzehnfach-Leistungsendstufe mit Nennströmen von 0,6 bis 3 Ampere sowie eine 5 Volt-Überwachung auf. Es sei darauf hingewiesen, daß die Abkürzung CAN für "Controller-Area-Network" steht. Hierunter wird ein standardisiertes serielles Bus-System für Kraftfahrzeuge zur Realisierung eines gegenseitigen Informations- und Datenaustausches zwischen einer Vielzahl elektronischer Steuergeräte verstanden.

Ziel der Erfindung ist es, eine innovative Partitionierung eines Peripheriechipsatzes bereitzustellen, welche flexibel einsetzbar ist und daher zukünftigen Anforderungen gerecht werden kann. Dies betrifft insbesondere die Partitionierung des Peripheriechipsatzes für die nächste Motorsteuergerätegeneration für Benzin- und/oder Dieselmotoren. Insbesondere wird angestrebt, eine Grundfunktionalität mit möglichst wenigen Komponenten bereitzustellen, wobei diese Grundfunktionalität bei Bedarf in einfacher Weise erweiterbar sein soll.

Dieses Ziel wird erreicht mit einem Peripheriechipsatz mit den Merkmalen des Patentanspruchs 1 sowie einem Motorsteuergerät mit den Merkmalen des Patentanspruches 8.

### Vorteil der Erfindung

Ein erfindungsgemäßer Peripheriechipsatz zur Realisierung von Hardwarefunktionen eines Steuergerätes weist wenigstens zwei elektronische Einheiten auf, welche eine Partitionierung zur Bereitstellung wenigstens einer Grundfunktionalität für ein Steuergerät gestatten. Diese erste und/oder zweite elektronische Einheit kann typischerweise als applikationsspezifischer elektronischer Schaltkreis (ASIC) ausgebildet sein.

Der erste ASIC zur Bereitstellung einer Grundfunktionalität des Steuergeräts kann bevorzugt folgende Komponenten aufweisen: eine Spannungsversorgung mit insbesondere vier unterschiedlichen Ausgangsspannungen, wenigstens eine, insbesondere drei Geberversorgungen, ein Überwachungsmodul, einen Treiber für bidirektionale serielle Schnittstellen, ein CAN-Treiber, insbesondere mit Wake-Up-Funktion (Aufwach-Funktion), eine Hauptrelaissteuerung, eine Hauptrelaisendstufe, ein SPI-Interface (Abkürzung für Serial Periphal Interface), einen Stop/Wake-Up-Counter (Anhalte/Aufwach-Zähler).

Ein zweiter ASIC zur Bereitstellung einer Grundfunktionalität des Steuergeräts kann folgende Komponenten aufweisen: eine insbesondere als Achtzehnfach-Leistungsendstufe ausgebildete Leistungsendstufe mit unterschiedlichen Nennströmen. Erfindungsgemäß können derartige Nennströme Größen zwischen 0,6 und 3 Ampere aufweisen. Desweiteren weist der zweite ASIC vorzugsweise eine, insbesondere zwei Kleinsignalendstufen und eine 5-Volt-Überwachung auf.

Diese beiden ersten und zweiten elektronischen Einheiten bzw. ASICs sind zur Bereitstellung einer Grundfunktionalität eines Steuergerätes, insbesondere eines Motorsteuergerätes erforderlich.

Diese Grundfunktionalität wird von jenen Hardware-Komponenten erfüllt, die unabhängig von der Ausbildung eines Einspritzsystems oder Kundenanforderungen für die Darstellung eines Motormanagementsystems für bestimmte Marktsegmente immer benötigt werden.

Mit dieser erfindungsgemäßen Ausgestaltung wird die Partitionierung des Peripheriechipsatzes an zukünftige Erfordernisse angepasst. Ein zusätzlicher Vorteil der neuen Partionierung besteht insbesondere in ihrer großen Flexibilität. Somit ist die Grundfunktionalität eines Steuergeräts bereits mit zwei elektronischen Einheiten bzw. ASICs darstellbar. Damit ist eine kostengünstige Abdeckung des Niedrigpreissegmentes möglich. Insbesondere individuelle Grundfunktionalitäten können mit wenigen, insbesondere zwei elektronischen Einheiten bzw. ASICs modular bereitgestellt werden. Somit ist nicht erforderlich, dass für diese Grundfunktionalitäten komplex konstruierte ASICs zum Einsatz kommen müssen.

Der erfindungsgemäße Peripheriechipsatz kann optional wenigstens eine zusätzliche elektronische Einheit aufweisen, die zweckmäßigerweise ebenfalls als applikationsspezifischer integrierter Schaltkreis (ASIC) ausgebildet sein kann und eine Partitionierung zur Bereitstellung wenigstens einer über die wenigstens eine Grundfunktionalität des Steuergerätes hinausgehende Funktionalität gestattet. Dieser Aspekt der Erfindung ist besonders dann von Vorteil, wenn derartige zusätzliche Anforderungen unterschiedlicher Art sind, jedoch nicht von jedem Steuergerät erfüllt werden müssen. Derartige konkrete Anforderungen können aufgrund des modularen Aufbaus des Peripheriechipsatzes durch gezielten Einsatz speziell ausgebildeter elektronischer Einheiten realisiert werden.

Somit können insbesondere spezielle Funktionalitäten des Steuergerätes flexibel, individuell oder rationell partitioniert werden.

Eine optionale weitere elektronische Einheit, die ebenfalls als ASIC ausgebildet sein kann, kann folgende Komponenten aufweisen: einen Analog/Digital-Wandler mit acht Kanälen; eine, insbesondere zwei Kleinsignalendstufen; einen Treiber für bidirektionale serielle Schnittstellen. Eine zusätzliche weitere elektronische Einheit, insbesondere als ASIC ausgebildet, kann insbesondere eine Auswerteschaltung für einen Induktivgeber aufweisen.

Derartige elektronische Einheiten sind zur Bereitstellung einer Grundfunktionalität eines Steuergerätes, insbesondere Motorsteuergeräts, nicht unbedingt erforderlich, sie dienen bevorzugt der Erweiterung der Funktionen des Peripheriechipsatzes.

Erfindungsgemäß kann der Aufbau einer elektronischen Einheit neuartige Anforderungen, was Grundfunktionalitäten sowie über Grundfunktionalitäten hinausgehende Anforderungen an Funktionalitäten betrifft, variieren. Einzelne elektronische Einheiten können dabei Komponenten aufweisen, welche die erfindungsgemäß konkret erwähnten Komponenten ersetzen oder ergänzen. Insbesondere beim Aufbau der weiteren elektronischen Einheiten können unterschiedliche Komponenten in unterschiedlichen Variationen zum Einsatz kommen, so dass konkrete Aufgaben durchgeführt werden können.

Desweiteren weist ein erfindungsgemäßer Peripheriechipsatz bevorzugt wenigstens einen Microcontroller bzw. Rechnerkern auf. Die Funktion dieses Rechnerkerns besteht darin, Steuerung, Regelung und Diagnose eines gesamten Motormanagementsystems zu übernehmen. Optional kann der Peripheriechipsatz in jeweils separaten Baugruppen, beispielsweise mit integrierten Schaltkreisen, folgende Komponenten aufweisen: wenigstens eine Auswerteeinrichtung für wenigstens eine Lambdasonde, wenigstens einen zusätzlichen CAN-Treiber, wenigstens eine zusätzliche Leistungsendstufe, und/oder wenigstens eine einspritzsystemspezifische Endstufe. Mittels derartiger separater Baugruppen kann eine Partitionierung eines Steuergerätes, insbesondere Motorsteuergerätes, an die jeweiligen Anforderungen, modular angepaßt werden.

In weiterer Ausgestaltung der Erfindung stellt die erste Geberversorgung eine erste Spannung und die zweite Geberversorgung eine zweite Spannung bereit, die dritte Geberversorgung ist zwischen der ersten Spannung und der zweiten Spannung umschaltbar und stellt entweder die erste Spannung oder die zweite Spannung bereit. In einer konkreten Ausführungsform der Erfindung kann die erste Spannung 5 Volt und die zweite Spannung 3,3 Volt betragen, somit ist die dritte Geberversorgung zwischen 5 Volt und 3,3 Volt umschaltbar.

Erfindungsgemäß ist der Peripheriechipsatz für ein Steuergerät, insbesondere für ein Motorsteuergerät einer zukünftigen Generation, insbesondere für Benzin- und Dieselmotoren geeignet. Das Motorsteuergerät kann dabei als Steuereinrichtung für ein Kraftstoffeinspritzsystem ausgebildet sein.

Der erfindungsgemäße Peripheriechipsatz dient der Bereitstellung von Hardwarefunktionen für ein Steuergerät, insbesondere für ein Motorsteuergerät eines Kraftfahrzeuges insbesondere für ein Kraftstoffeinspritzsystem. Der Peripheriechipsatz ist modular aus integrierten applikationsspezifischen Elementarschaltkreisen zur Bereitstellung einer Grundfunktionalität des Steuergerätes sowie optional mit applikationsspezifischen integrierten Ergänzungsschaltkreisen zur Bereitstellung von über die Grundfunktionalität hinausgehenden Anforderungen an das Steuergerät ausgebildet. Aufgrund der flexiblen und modularen Bauweise des Peripheriechipsatzes, welcher den Anforderungen entsprechend aufgebaut ist, ist eine individuelle Größenanpassung an konkrete Funktionalitäten eines Steuergerätes realisierbar.

### Zeichnung

Die vorliegende Erfindung wird nun anhand der beigefügten Zeichnung weiter erläutert. In dieser zeigt

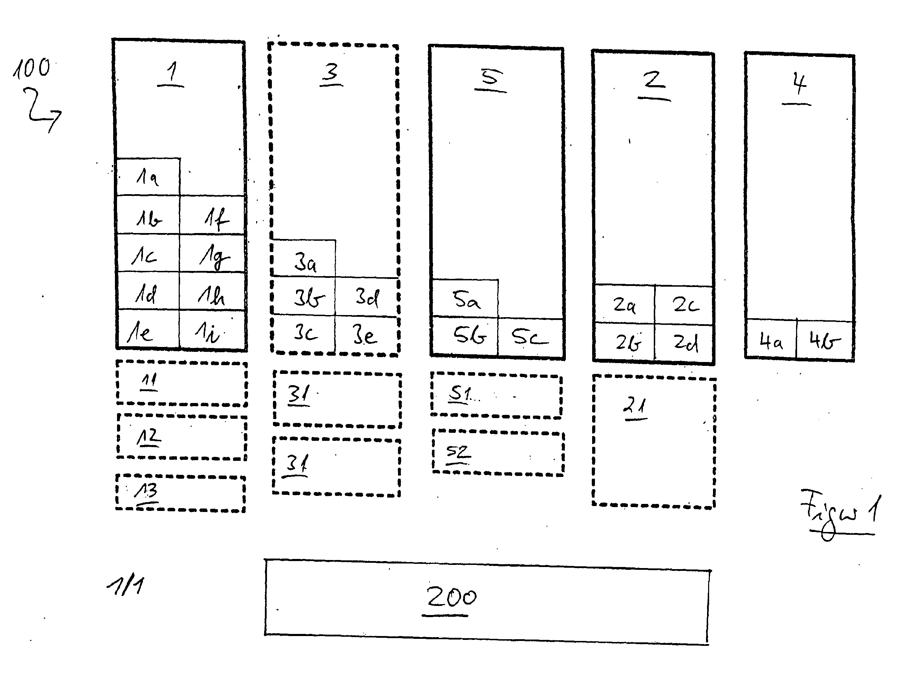

Figur 1 ein schematisches Blockdiagramm einer bevorzugten Ausführungsform des erfindungsgemäßen Peripheriechipsatzes.

In der Figur 1 ist gemäß eines bevorzugten Ausführungsbeispiels der Erfindung eine konkrete Partitionierung eines Peripheriechipsatzes 100 schematisch dargestellt. Der erfindungsgemäße Peripheriechipsatz 100 weist als erste elektronische Einheit einen ersten ASIC 1 (Power-Supply), als zweite elektronische Einheit einen zweiten ASIC 2 (Universal-Power-Drivers), als dritte, ergänzende elektronische Einheit einen dritten ASIC 3 ("ADC"-Chip), eine Einspritzsteuereinrichtung 4 (Injection-Powerstage) sowie einen Rechnerkern 5 (Microcontroller) auf. Dabei ist vorgesehen, dass neben dem Rechnerkern 5 als zentraler Einrichtung der erste ASIC 1 sowie der zweite ASIC 2 zur Bereitstellung der Grundfunktionalität eines Steuergerätes 200 dienen. Alle anderen in der Figur dargestellten Komponenten des Peripheriechipsatzes 100 sind lediglich zur Bereitstellung von über die Grundfunktionalität des Steuergerätes 200 hinausgehenden Anforderungen vorgesehen.

Der erste ASIC 1 weist eine Rückstelleinrichtung 1a (Reset), einen Zündungseingang 1b (Ignition-Input), eine Hauptrelaiskontrolleinrichtung 1c (Main-Relais-Controll), eine Aufwacheinrichtung 1d (Wake-up), ein Serial Periphal Interface 1e, einen Treiber 1f für bidirektionale serielle Schnittstellen (ISO-Driver), eine Überwachungseinrichtung 1g (Supervisor), einen Stop/Wakeup Counter 1h, eine Spannungsversorgung sowie einen CAN-Treiber 1i (CAN-Driver) auf. In anderen bevorzugten Ausführungsformen der Erfindung können einzelne Komponenten des ersten ASICs 1 durch andere Komponenten ergänzt werden. Außerdem kann der Peripheriechipsatz 100 in separaten Baugruppen zwei CAN-Treiber 11, 12 (CAN-Driver) sowie ein induktiver Sensor 13 (Inductive Sensor) als optionale Erweiterung aufweisen.

Der zweite ASIC 2 weist eine Achtzehnfach-Leistungsendstufe 2a, welche alternativ als Sechzehnfach-Leistungsendstufe ausgebildet sein kann (Lowside-Driver), zwei Kleinsignalendstufen 2b (Small-Signal-Driver), einen uS-Bus 2c, als serielle Schnittstelle zwischen dem Rechnerkern 5 (Microcontroller) und dem ASIC 2, sowie eine 5-Volt-Überwachung 2d (5V-Monitor) auf. Im zweiten ASIC 2 ist in einer separaten Baugruppe optional wenigstens ein zusätzlicher Leistungstreiber 21 (Additional Power-Driver) zugeordnet, dieser kann Mehrfach-Leistungsendstufen aufweisen.

Der ergänzende ASIC 3 weist einen 5V-Analog/Digital-Wandler 3a mit acht Kanälen (ADC-Channels) ein SPI-Interface 3b, zwei Kleinsignalendstufen 3c mit einer Digagnoseeinrichtung 3d sowie einen Treiber 3e für bidirektionale serielle Schnittstellen (ISO Driver) auf. Außerdem kann der Peripheriechipsatz optional zwei Lambdasonden 31 (Lambda-Evaluation) als optionale Erweiterung aufweisen.

Der für die Funktion des Peripheriechipsatzes eingesetzte Microcontroller 5 bzw. Rechnerkern weist ein integriertes Flash 5a, ein intergrietes SRAM 5b sowie eine intelligente Peripherie 5c auf. Dem Microcontroller 5 sind optional ein externes Flash 51 und ein externes SRAM 52 zugeordnet. Soll mittels des Peripheriechipsatzes 100 eine Steuereinrichtung für ein Kraftstoffeinspritzsystem bereitgestellt werden, ist eine einspritzsystemspezifische Endstufe 4 erforderlich.

Je nach Anforderungenen, die an die Funktionalität eines Steuergerätes gestellt werden, kann ein Peripheriechipsatz 100 gemäß der Figur 1 ausgebildet sein. Aufgrund der erfindungsgemäßen Möglichkeit, einen Peripheriechipsatz 100 flexibel und modular aufzubauen, sind Hardwarefunktionen des Steuergeräts individuell partitionierbar. Einzelne Komponenten des Peripheriechipsatzes 100, wie in der Figur 1 abgebildet, können jeweiligen Anforderungen entsprechend durch andere Komponenten ergänzt werden.

## Patentansprüche

1. Peripheriechipsatz zur Realisierung von Hardwarefunktionen eines Steuergerätes, der wenigstens zwei elektronische Einheiten aufweist, die eine Partitionierung zur Bereitstellung einer Grundfunktionalität des Steuergeräts gewährleisten, bei dem die erste elektronische Einheit (1)
- eine Spannungsversorgung mit unterschiedlichen Ausgangsspannungen,
- wenigstens eine, insbesondere drei Geberversorgungen,
- ein Überwachungsmodul (1g),
- einen Treiber (1e) für bidirektionale serielle Schnittstellen,
- einen CAN-Treiber (1i), insbesondere mit Aufwach- bzw. wake-up-Funktion,
- eine Hauptrelaissteuerung (1c),
- eine Hauptrelaisendstufe,
- ein Serial-Periphal-Interface(SPI), und
- einen Stop/Aufwach-Zähler (1d),
- wobei die zweite elektronische Einheit (1, 2)
- eine Leistungsendstufe, insbesondere eine Achtzehnfach-Leistungsendstufe (2a), insbesondere mit Nennströmen zwischen 0,6 A und 3 A,
- wenigstens eine, insbesondere zwei Kleinsignalendstufen (2b), und
- eine Spannungsüberwachung, insbesondere eine Fünf-Volt-Überwachung (2d), aufweist.

2. Peripheriechipsatz (100) nach Anspruch 1, der optional wenigstens eine zusätzliche elektronische Einheit (3) aufweist, welche eine Partitionierung zur Bereitstellung einer über die Grundfunktionalität des Steuergerätes (200)hinausgehende Funktionalität gestattet und folgende Komponenten aufweist:
- ein Analog/Digital-Wandler (3a) mit insbesondere acht Kanälen,
- eine, insbesondere zwei Kleinsignalendstufen (3c),
- einen Treiber (3b) für bidirektionale serielle Schnittstellen.

3. Peripheriechipsatz (100) nach einem der Ansprüche 1 oder 2, der optional wenigstens eine zusätzliche elektronische Einheit (4) aufweist, welche eine Partitionierung zur Bereitstellung einer über die Grundfunktionalität des Steuergerätes hinausgehenden Funktionalität gestattet und eine Auswerteschaltung für Induktivgeber aufweist.

4. Peripheriechipsatz (100) nach einem der Ansprüche 1 bis 3, bei dem wenigstens eine elektronische Einheit (1, 2, 3, 4) als applikationsspezifischer elektronischer Schaltkreis ausgebildet ist.

5. Peripheriechipsatz nach einem der vorstehenden Ansprüche, der einen Rechenkern (5) bzw. Microcontroller aufweist.

6. Peripheriechipsatz nach einem der vorstehenden Ansprüche, optional mit
- wenigstens einer Auswerteeinrichtung für wenigstens eine Lambda-Sonde (31, 32),
- wenigstens einem zusätzlicher CAN-Treiber (11, 12),
- wenigstens einer zusätzlichen Leistungsendstufe (21),
- wenigstens eine einspritzsystemspezifische Endstufe (4), wobei diese Komponenten insbesondere in separate Baugruppen untergebracht sind.

7. Peripheriechipsatz nach Anspruch 1, bei der eine erste Geberversorgung eine erste Spannung von insbesondere 5 V bereitstellt, eine zweite Geberversorgung eine zweite Spannung von insbesondere 3,3 V bereitstellt und eine dritte Geberversorgung zur Bereitstellung einer Spannung zwischen der ersten Spannung von insbesondere 5 V und der zweiten Spannung von insbesondere 3,3 V umschaltbar ist.

8. Motorsteuergerät, insbesondere für ein Kraftfahrzeug mit wenigstens einem Peripheriechipsatz (100) nach einem der Ansprüche 1 bis 7.

9. Motorsteuergerät nach Anspruch 8, welches als Steuereinrichtung für ein Motormanagementsystem, insbesondere Kraftstoffeinspritzsystem ausgebildet ist.

## Claims

1. Peripheral chip set for implementing hardware functions of a control device, which chip set has at least two electronic units, which ensure partitioning for the purpose of providing a basic functionality of the control device, and in which the first electronic unit (1) has
- a voltage supply having different output voltages,
- at least one sensor supply, in particular three sensor supplies,
- a monitoring module (1g),
- a driver (1e) for bidirectional serial interfaces,
- a CAN driver (li), in particular with a wake-up function,
- a main relay controller (1c),
- a main relay output stage,
- a serial peripheral interface (SPI), and
- a stop/wake-up counter (1d),
- the second electronic unit (1, 2) having
- a power output stage, in particular an eighteenfold power output stage (2a), in particular having nominal currents of between 0.6 A and 3 A,
- at least one small-signal output stage, in particular two small-signal output stages (2b), and
- a voltage monitoring system, in particular a five-volt monitoring system (2d).

2. Peripheral chip set (100) according to Claim 1, which optionally has at least one additional electronic unit (3) which allows partitioning for the purpose of providing a functionality that goes beyond the basic functionality of the control device (200) and has the following components:
- an analogue/digital converter (3a) with, in particular, eight channels,
- one small-signal output stage, in particular two small-signal output stages (3c),
- a driver (3b) for bidirectional serial interfaces.

3. Peripheral chip set (100) according to either of Claims 1 and 2, which optionally has at least one additional electronic unit (4) which allows partitioning for the purpose of providing a functionality that goes beyond the basic functionality of the control device and has an evaluation circuit for an inductive sensor.

4. Peripheral chip set (100) according to one of Claims 1 to 3, in which at least one electronic unit (1, 2, 3, 4) is in the form of an application-specific electronic circuit.

5. Peripheral chip set according to one of the preceding claims, which has a computer core (5) or microcontroller.

6. Peripheral chip set according to one of the preceding claims, optionally having
- at least one evaluation device for at least one lambda probe (31, 32),
- at least one additional CAN driver (11, 12),
- at least one additional power output stage (21),
- at least one output stage (4) which is specific to the injection system, these components being accommodated, in particular, in separate subassemblies.

7. Peripheral chip set according to Claim 1, in which a first sensor supply provides a first voltage of, in particular, 5 V, a second sensor supply provides a second voltage of, in particular, 3.3 V and a third sensor supply can be changed over in order to provide a voltage between the first voltage of, in particular, 5 V and the second voltage of, in particular, 3.3 V.

8. Engine control device, in particular for a motor vehicle, having at least one peripheral chip set (100) according to one of Claims 1 to 7.

9. Engine control device according to Claim 8, which is in the form of a control device for an engine management system, in particular a fuel injection system.

## Revendications

1. Jeu de puces périphériques pour réaliser des fonctions de circuit d'un appareil de commande ayant au moins deux unités électroniques assurant une répartition pour fournir une fonctionnalité de base de l'appareil de commande selon lequel la première unité électronique (1) comprend :
- une alimentation en tension avec des tensions de sortie différentes,
- au moins une et notamment trois alimentations de capteur, un module de surveillance (1g),
- un pilote (1e) pour des interfaces série bidirectionnelles,
- un pilote CAN (li), notamment avec une fonction de réveil,
- une commande de relais principal (1c),
- un étage de puissance de relais principal,
- une interface série-périphérique (SPI), et
- un compteur arrêt/réveil (1d),
- la seconde unité électronique (1, 2) comprenant
- un étage de puissance notamment un étage de puissance huit dix fois (2a) notamment avec des courants nominaux compris entre 0,6 A et 3 A,
- au moins un étage de puissance de petits signaux (2b), et notamment deux tels étages de puissance et
- une surveillance de tension, notamment une surveillance de tension de 5 volts (2d).

2. Jeu de puces périphériques (100) selon la revendication 1 ayant au moins une unité électronique supplémentaire (3) qui présente une répartition pour fournir une fonctionnalité au-delà de la fonctionnalité de base de l'appareil de commande (200) et ayant les composants suivants :
- un convertisseur analogique/numérique (3a) avec notamment huit canaux,
- un étage de puissance de petits signaux, notamment deux tels étages de puissance (3c),
- un pilote (3b) pour des interfaces série bidirectionnelles.

3. Jeu de puces périphériques (100) selon la revendication 1 ou 2, ayant en option au moins une unité électronique supplémentaire (4) qui présente une répartition pour fournir une fonctionnalité allant au-delà de la fonctionnalité de base de l'appareil de commande et un circuit d'exploitation pour des capteurs inductifs.

4. Jeu de puces périphériques (100) selon l'une des revendications 1 à 3, avec au moins une unité électronique (1, 2, 3, 4) réalisée comme circuit électronique spécifique à une application.

5. Jeu de puces périphériques (100) selon l'une des revendications précédentes, comportant un microcontrôleur (5).

6. Jeu de puces périphériques (100) selon l'une des revendications précédentes, avec en option
- au moins une installation d'exploitation pour au moins une sonde lambda (31, 32),
- au moins un pilote CAN supplémentaire (11, 12),
- au moins un étage de puissance supplémentaire (21),
- au moins un étage de puissance spécifique à un système d'injection (4), ces composants étant logés notamment dans des ensembles distincts.

7. Jeu de puces périphériques (100) selon la revendication 1, avec une première alimentation de capteur fournissant une tension, notamment de 5 V, une seconde alimentation de capteur fournissant une seconde tension, notamment de 3,3 V et une troisième alimentation de capteur pour fournir une tension commutée entre la première tension qui est notamment de 5 V et la seconde tension qui est notamment de 3,3 V.

8. Appareil de commande de moteur notamment pour un véhicule automobile ayant au moins un jeu de puces périphériques (100) selon l'une des revendications 1 à 7.

9. Appareil de commande de moteur selon la revendication 8 réalisé comme installation de commande pour un système de gestion de moteur, notamment un système d'injection de carburant.
